# EUROPEAN PATENT APPLICATION

(11) **EP 3 451 644 A1**
(43) Date of publication of application: **06.03.2019**
(21) Application number: 17188517.1
(22) Date of filing: 30.08.2017
(51) Int. Cl.: H04M 3/51, H04M 3/523

(54) **COMPUTER-IMPLEMENTED METHOD OF OPERATING A CONTACT CENTER**

(71) Applicant: virtualQ GmbH, 70193 Stuttgart (DE)
(72) Inventor: Kühnapfel, Jens, 70193 Stuttgart (DE); Kühnapfel, Ulf, 70193 Stuttgart (DE); Liebisch, Niels, 70569 Stuttgart (DE)
(74) Representative: Meyer zu Bexten, Elmar

(57) **Abstract**

**Problem**

Language as a human-machine interface is gaining in importance. When calling a contact center however, only very simple applications like interactive voice response ("press 1 for...") may typically be used. This in turn allows only for a very limited pre-classification of callers.

Depending on the reason for their call, callers are directed to an employee who answers their questions. In many cases however, queries are repetitive, forcing contact center agents to answer the same questions over and over, which again increases personnel cost as multiple agents are tied up in redundant conversations.

**Solution**

The problem is solved by a computer-implemented method (10) of operating a contact center (11), comprising taking a telephone call (13) by a user (12) to the contact center (11), offering the user (12) to join a virtual queue and, in case the user (12) chooses not to join (14), relaying the call (13) to an agent (15) of the contact center (11), wherein, in case the user (12) chooses to join, the call (13) is redirected (16) to a voice service (17) configured to answer questions by the user (12).

## Description

### Technical Field

The invention relates to the process and products as per the first portion of the independent claims.

### Background Art

In customer relationship management, a contact center is generally defined as a coordinated system of people, processes, technologies, and strategies that provides access to information, resources, and expertise through appropriate channels of communication, enabling interactions that create value for the customer and organization. An optional virtual queue provides callers to the contact center with a convenient alternative to waiting on hold when no agents are available to handle inbound call demand.

EP 3107275 A (VIRTUALQ UG (HAFTUNGSBESCHRÄNKT)) 21.12.2016 discloses a state-of-the-art virtual queuing system comprising various interfaces.

Advanced call center technologies to improve agent productivity and customer satisfaction include speech recognition software to allow computers to handle first-level customer support, text mining, and natural language processing to allow better customer handling, agent training by automatic mining of best practices from past interactions, as well as support automation. Pertinent technologies have been studied, e. g., in SUHM, Bernhard, et al. A comparative study of speech in the call center: natural language call routing vs. touch-tone menus. Proceedings of the SIGCHI conference on Human Factors in Computing Systems. April, 2002, p.283-290.

### Summary of invention

The invention as claimed is hereinafter disclosed in such a way that the technical problem with which it deals can be appreciated and the solution can be understood.

### Technical Problem

Language as a human-machine interface is gaining in importance. When calling a contact center however, only very simple applications like interactive voice response ("press 1 for...") may typically be used. This in turn allows only for a very limited pre-classification of callers.

Depending on the reason for their call, callers are directed to an employee who answers their questions. In many cases however, queries are repetitive, forcing contact center agents to answer the same questions over and over, which again increases personnel cost as multiple agents are tied up in redundant conversations.

### Solution to Problem

The problem is solved as per the characterizing portion of the independent claims. In summary, a system as per the invention serves as a control tool for voice interaction with the calling customer. To this end, callers are prompted to describe their problem on the phone or other microphone-equipped device such as a smartwatch or voice assistant. By means of artificial intelligence (Al), suitable answers are determined and played to the caller. On this basis, a voice dialog between the artificial intelligence and the caller unfolds.

The Al dynamically changes the content of the responses to meet the objectives of the contact center. For this purpose, the technology detects causal connections throughout call history. Caller data and profiles are generated to provide personalized responses. Relevant customer relationship management (CRM) systems and knowledge databases are addressed via interfaces to retrieve the required information. Further interfaces to web pages and databases serve to enrich and aggregate information.

Based on the recognition of patterns and the data thus aggregated, the system can provide predictive and proactive responses. While the caller is speaking, his voice is recorded and analyzed. Patterns detected by means of such voice analysis are considered when selected an adequate response.

Via an interface, a responsible manager can influence the corresponding scripts and control parameters, enter target values, and scan historical trends.

Questions that could not be answered may be recorded, evaluated, and redirected to the respective agent to create an appropriate response template. Such response template can be used whenever the same question should rearise. The resulting architecture may be considered a learning system.

Enquiries that ultimately remain unanswered are connected via intelligent routing to customer service employees by telephone.

### Advantageous effect of invention

Existing voice response systems function statically. Typically, an answer, once given, remains unchanged until its laborious replacement. The system presented hereinafter operates dynamically and continuously develops new, data-based, specific, and personalized responses. Not every caller with the same request receives the same answer. Rather, the caller's profile, external data, and control tasks of the company affect which responses the caller receives.

In a representative use case, an embodiment of the invention bears the potential of resolving more than 30 per cent of customers' issues without human intervention. Hence, from the contact center's perspective, a vast number of inbound calls may be eliminated especially during peak hours. Furthermore, the invention allows for an uncomplicated integration into existing call center environments and brings about a significant advertising effect.

### Brief description of drawings

Figure 1 is a use case of a voice service as per an embodiment of the invention.
Figure 2 is a block schematic of the voice service as per the embodiment of Figure 1.

### Description of embodiments

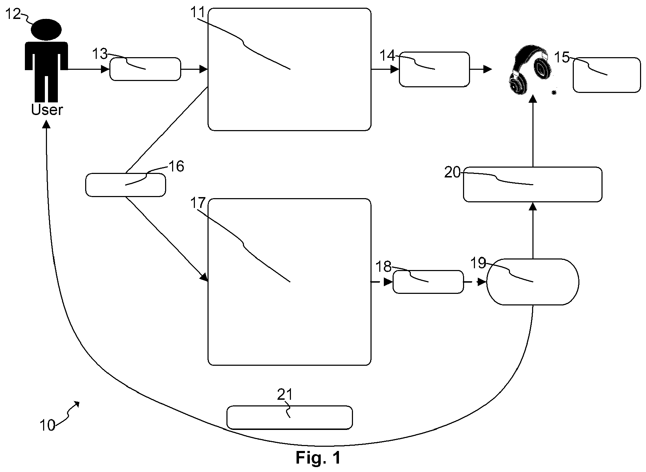

Figure 1 illustrates a characteristic use case of the invention wherein a contact center (11) takes a user's telephone call (13). Depending on estimated waiting time (EWT) and current utilization of the waiting field, the user (12) is offered - such as through an announcement - to join a virtual queue. In case the user (12) declines (14), her call (13), upon waiting on hold, is eventually relayed to the competent agent (15) of the contact center (11).

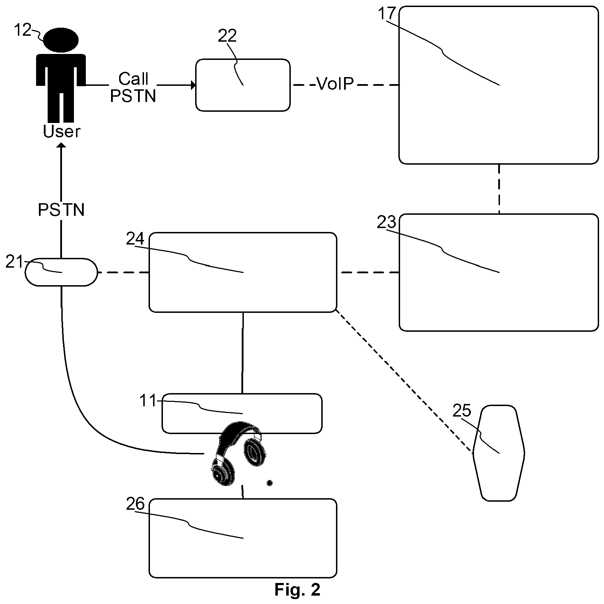

If, on the other hand, the user (12) accepts the offer to join the virtual queue, her call (13) is redirected (16) to a voice service (17) whose high-level architecture may be gathered from Figure 2. In the present embodiment, that service (17), based on an audio connection kit and proprietary client, is delivered from the contact center's private branch exchange (PBX) via a so-called session initiation protocol (SIP) trunk (22) and configured to answer the user's questions by means of a bot engine or speech synthesizer (23). Depending on the bot's customer service skills (24), the answers given vary in content depending on the identity of the user (12), previous communications between the user (12) and voice service (17), or key performance indicators of the contact center (11), to which end the voice service (17) interfaces a customer relationship, knowledge, or other management database (26) maintained by the contact center (11). These and other skills (24) of the service (17) may further be accessible through intelligent virtual assistant hardware (25) such as a smart speaker or mobile device.

Turning back to Figure 1, the voice service (17), upon having answered any immediate questions, nonetheless offers the user (12) to connect to the agent (15) in case not all issues should have been resolved to her complete satisfaction. If she indeed chooses to be connected, the user (12) remains in the virtual queue over a shortened waiting period (18) until her turn (19) arrives, upon which the user (12) takes precedence (20) over users having chosen not to join (14) the virtual queue. As an alternative to virtual queuing, she may also elect to receive a call-back (21), text message, web notification, voice prompt, push notification (apps) or any other notification by the contact center (11) at her preference.

For those questions that the voice service (17) fails to answer satisfactorily, records are kept and eventually replayed or shown as text to the agent (15). At that point, the agent (15) may be prompted for a pertinent answer which is played to the user (12) upon call-back (21). Preferably, the newly provided answer is further leveraged to revise, train, or expand the skills (24) themselves, thereby improving the service (17) permanently for future users.

While not depicted, a Web application including a so-called dashboard serves to manipulate, delete, reroute, adapt, or otherwise manage the skills (24) and answers. Such application may further suggest synonymous questions or novel answers based on records of previously unanswered questions.

### Industrial applicability

The invention may be applied, among others, throughout the contact center industry or on any website in general.

### Reference signs list

The following reference signs denote corresponding features consistently throughout the attached drawings.

| | |
|---|---|
| Method | 10 |
| Contact center | 11 |
| User | 12 |
| Call | 13 |
| Without virtual queue | 14 |
| Agent | 15 |
| Redirect | 16 |
| Voice service | 17 |
| Waiting period | 18 |
| User's turn | 19 |
| Precedence | 20 |
| Call-back or other method like text-message, prompt, or notification | 21 |
| SIP trunk | 22 |
| Bot engine or speech synthesizer | 23 |
| Customer service skills | 24 |
| Intelligent virtual assistant | 25 |
| Management database | 26 |

### Citation list

The following documents are cited throughout this document.

### Patent literature

EP 3107275 A (VIRTUALQ UG (HAFTUNGSBESCHRÄNKT)) 21.12.2016 Non-patent literature

SUHM, Bernhard, et al. A comparative study of speech in the call center: natural language call routing vs. touch-tone menus. Proceedings of the SIGCHI conference on Human Factors in Computing Systems. April, 2002, p.283-290.

## Claims

1. Computer-implemented method (10) of operating a contact center (11), comprising
taking a telephone call (13) by a user (12) to the contact center (11), offering the user (12) to join a virtual queue and,
in case the user (12) chooses not to join (14), relaying the call (13) to an agent (15) of the contact center (11),
**characterized in that**, in case the user (12) chooses to join,
the call (13) is redirected (16) to a voice service (17) configured to answer questions by the user (12).

2. Method (10) as per Claim 1 wherein,
upon having answered the questions, the voice service (17) offers to connect the user (12) to the agent (15) and,
in case the user (12) chooses to be connected, the user (12) remains in the virtual queue over a shortened waiting period (18) until her turn (19) arrives.

3. Method (10) as per Claim 2 wherein,
upon her turn (19), the user (12) takes precedence (20) over users having chosen not to join (14) the virtual queue.

4. Method (10) as per Claim 2 wherein,
upon her turn (19), the user (12) receives a call-back (21), text message, web notification, voice prompt, push notification or any other notification by the contact center (11).

5. Method (10) as per any of the preceding claims wherein
the voice service (17) is driven by a bot engine or speech synthesizer (23) equipped with customer service skills (24).

6. Method (10) as per Claim 5 wherein
the skills (24) are further accessible through intelligent virtual assistant hardware (25) such as a smart speaker or mobile device.

7. Method (10) as per Claim 5 or Claim 6 wherein,
if the voice service (17) fails to answer the questions, records thereof are kept and replayed or given as text to answer in writing to the agent (15) or dashboard manager, the agent (15) is prompted for a pertinent answer, the user (12) is called and played the answer, and, preferably, the skills (24) are revised, trained, or expanded based on the answer.

8. Method (10) as per Claim 7 wherein
the skills (24) are managed, such as manipulated, deleted, rerouted, or adapted, by means of a Web application.

9. Method (10) as per Claim 8 wherein
the Web application is configured to suggest synonymous questions or novel answers based on the records of the unanswered questions.

10. Method (10) as per any of the preceding claims wherein
the answers vary in content depending on the identity of the user (12), previous communications between the user (12) and voice service (17), or key performance indicators of the contact center (11).

11. Method (10) as per any of the preceding claims wherein
the voice service (17) interfaces a customer relationship, knowledge, or other management database (26) maintained by the contact center (11).

12. Method (10) as per any of the preceding claims wherein
the voice service (17) is delivered over a public switched telephone network via a SIP trunk (22).

13. Data processing apparatus having means for carrying out the
method (10) of any of the preceding claims.

14. Computer program (17) comprising instructions which, when the
program is executed by a computer, cause the computer to carry out the method (10) of any of Claim 1 to Claim 12.

15. Computer-readable medium having stored thereon the computer
program (17) of Claim 14.
